# EUROPEAN PATENT APPLICATION

(11) **EP 1 002 603 A1**
(43) Date of publication of application: **24.05.2000**
(21) Application number: 99308926.7
(22) Date of filing: 09.11.1999
(51) Int. Cl.: B22F 9/08, H01M 4/38, C01B 3/00

(54) **Hydrogen-absorbing alloy powder and method for its production**

(30) Priority: 17.11.1998 JP 32698798
(71) Applicant: TEIKOKU PISTON RING CO. LTD., Chuo-ku Tokyo (JP)
(72) Inventor: Oguchi, Masahiro, Tokyo (JP); Hanada, Fusanobu, Tokyo (JP); Yosizawa, Katuyuki, Tokyo (JP); Shouji, Tadashi, Tokyo (JP)
(74) Representative: Skailes, Humphrey John

(57) **Abstract**

A hydrogen-absorbing alloy powder having particles which have a flaky shape having a thickness of at most 10 µm and an aspect ratio (a ratio of a longitudinal diameter relative to a thickness) of at least 10, and a structure having columns extending from one surface toward another surface of flat surfaces; and a method for its production.

## Description

### Background of the Invention

The present invention relates to a hydrogen-absorbing alloy powder having hydrogen-absorbing characteristics, useful for nickel-hydrogen batteries, hydrogen storage media for fuel cells, etc., and a method for producing the same.

In 1970, it was found that a LaNi₅ compound alloy has a characteristic of absorbing and desorbing hydrogen. The hydrogen absorption and desorption behavior of the LaNi₅ alloy is based on a relation of Pa > Pd under isothermic condition wherein Pa is a hydrogen pressure at hydrogen absorption and Pd is a hydrogen pressure at hydrogen desorption, and a relation of Ta < Td under isotactic condition wherein Ta is a temperature at hydrogen absorption and Td is a temperature at hydrogen desorption. These relations meet the principle of a gas-solid conversion under equilibrium condition. In general, metal materials showing a hydrogen absorption and desorption behavior by controlling the temperature and pressure of hydrogen, are called hydrogen-absorbing (or hydrogen-storing) alloys. As such metal materials, a number of alloy compositions such as LaNi₅, ZrNi₂, TiFe and Mg₂Ni, have been developed.

The hydrogen-absorbing alloys are used for, for example, cathode materials for nickel-hydrogen batteries, hydrogen storage media for fuel cells and hydrogen engines, and heat pumps. The nickel-hydrogen batteries are the ones obtained by replacing cadmium used as the cathode of the nickel-cadmium battery as a similar rechargeable battery, with the hydrogen-absorbing alloy. Although the principle of operations are almost same, the nickel-hydrogen battery can be said excellent in that the storage capacity of battery is at least twice that of the nickel-cadmium battery, and from the aspect of environment that it uses no cadmium as a toxic substance. The nickel-hydrogen battery is used for cellular phones, lap top computers, etc., and deemed to be the most promising one for batteries of electric vehicles in the future. Interests have been increased with respect to the nickel-hydrogen batteries and hydrogen engines as the energy and power mechanisms, taking due care for environment. As hydrogen supply materials and storage materials for fuel cells and hydrogen engines, compressed hydrogen gas, liquid hydrogen, hydrocarbon reformer, hydrogen-absorbing alloys, etc. have been studied. However, taking into consideration hydrogen density and safety as well as harmlessness, a hydrogen supply system using the hydrogen-absorbing alloy as a storage medium, is ideal. The hydrogen absorption and hydrogen desorption of the hydrogen-absorbing alloy, are accompanied with exothermic reaction and endothermic reaction, respectively. The one using this action is a heat pump, and it is possible to construct a heat pump of a closed system by using at least two hydrogen-absorbing alloys having different properties.

As the hydrogen-absorbing alloy, a powdered material is used for the purpose of accelerating the rate of hydrogen absorption and desorption. In a general production method, at first, constituting elements are melted under an inert atmosphere or a vacuum condition, and then cooling it or casting it into a mold. The cast ingot is roughly pulverized, and then subjected to heat treatment for homogenization for a long period of time at a temperature of about 1000°C under a vacuum condition or an inert atmosphere. The homogenized alloy ingot is pulverized to a predetermined particle size by a finely pulverizing method such as ball milling method, and subjected to sifting step for finishing.

Further, as a method for producing the hydrogen-absorbing alloy powder, a rapidly quenching process may be applied. The rapidly quenching process is advantageous in that a structure may easily be homogenized and fine structure of crystal particles may easily be controlled. As the rapidly quenching process, a so-called roll-quenching method, i.e. a technic wherein an alloy melt is poured from a tapered nozzle onto a cooling rotator which rotates continuously to obtain a tape-like material; an atomizing method wherein a high-pressure gas is sprayed to a melt to obtain a powdered material, etc. may be mentioned. As advantages, the former can produce an excellent crystal structure, and the latter requires no fine pulverization step. Moreover, as described in JP-A-7-102307, a technic has also been proposed wherein atomization is conducted on a cylindrical roll and melt droplets are collided against the roll to produce a powder of flake-like particles, in order to obtain both advantages of the two technics.

However, the hydrogen-absorbing alloy powder produced by conventional methods have the following problems and drawbacks to be solved.

First, with respect to the powder obtained by pulverizing after the casting, the particle shapes are uneven and the range of particle size distribution is wide. The shape of the particles constituting the powder, although depending upon the use, may sometimes cause the worsening of flowability of the powder at the time of molding compressed powder, or inclusion of a gas at the time of kneading with a resin. Further, if the particle size is large, adverse affects will be given at the time of molding of the powder like the above example. On the contrary, with respect to the powder having a small particle size, the specific surface area can be increased if the particle size is sufficiently small, but if used for a storage tank employing the hydrogen-absorbing alloy as the hydrogen storage medium, not only clogging of filters of the tank and breakage of mechanically movable parts will be caused, but also breakage of containers and equipment will be caused, such being dangerous. Further, when the frequency of contact between the particles is reduced, thermal conductivity will decrease and the rate of hydrogen absorption and desorption reaction will decrease. Even if used for a nickel-hydrogen battery, the reduction of the frequency of contact results in the reduction of charging efficiency in the electrodes, thereby reducing the capacity and shortening the life of the electrodes. Accordingly, the particle size is desirably within a certain range.

Moreover, the powder produced by an atomizing method of a rapidly quenching method, has a smooth surface and a particle size in a predetermined range at a certain level. This process has a merit such that no finely pulverizing step is needed, since the powder can be produced directly from a melt. However, the particles constituting the powder obtainable by the atomizing method have a spherical shape, and thus the surface area per unit volume is small and the rate of hydrogen absorption and desorption will decrease. Further, since the spherical particles are isotropically quenched from the surface, the inside structure of the particles is of a radial structure. Since such a radial structure has a large strain of lattice and the strain attributable to the absorption of hydrogen is hardly reduced, particle size reduction of the powder tends to cause and adverse effects will be given on the hydrogen-absorbing characteristics. Furthermore, if the powder has no quenching effect, unhomogeneity of components will be caused and the hydrogen-absorbing characteristics will be worsened. On the contrary, if the quenching is excessive, amorphitization will be caused, the desired compound will not be obtained, and adequate hydrogen-absorbing characteristics will not be obtained.

On the other hand, conventional methods for producing the hydrogen-absorbing alloys, have the following problems and drawbacks to be solved.

In a method for pulverizing the alloy ingot produced by a casting method, it is necessary to conduct annealing at a high temperature for a long period of time under a vacuum condition or an inert gas atmosphere, in order to solve the problem of solidification and unhomogeneity of the alloy. This step inevitably increases the costs of the powder. Further, at the time of pulverization, strain of work hardening is formed in the alloy, and remaining strain of work hardening leads to worsening of the hydrogen-absorbing characteristics. Furthermore, since almost all of the hydrogen-absorbing alloys are compound alloys and have a brittle property, fine particles which can not be used as products will be formed at the time of pulverization, resulting in a lot of loss.

In the method for producing the powder by an atomizing method, it is difficult to control the quenching rate, and thus homogeneous fine structure is hardly obtainable. The roll-quenching method is not suitable for mass production, since it is difficult to control a melt. Although it is possible to obtain particles by pulverizing the material produced by the roll-quenching method, the thickness of the pulverized particles is at least 15 µm. With particles having a thickness exceeding 10 µm, it is difficult to form a structure having complete columns in a thickness direction, and the strain at the time of hydrogen absorption is hardly reduced.

Further, in a method wherein an atomizing method and a quenching method with a cylindrical roll are combined, the atomizing gas is mainly separated into two flows of a rotational direction and a counter rotational direction. The gas flow in the rotational direction of the roll increases its speed, and the gas flow in the counter rotational direction decreases its speed. The difference in the speeds causes a pressure difference, and a melt flow or melt droplets divided into sections by atomizing, leave the roll and are quenched, resulting in spherical particles. The formation of the spherical particles can be avoided to some extent by placing the gas-spraying position directly above the roll, but in such instance, the flow length of the melt flow becomes long, resulting in a problem that efficient dividing of the melt by atomizing can not be conducted.

### Summary of the Invention

Accordingly, it is an object of the present invention to provide a hydrogen-absorbing alloy powder and a method for producing it by an appropriate method, by which the above problems can be reduced.

In order to accomplish the above object, the present invention provides a hydrogen-absorbing alloy powder comprising particles which have a flaky shape having a thickness of at most 10 µm and an aspect ratio (a ratio of a longitudinal diameter relative to a thickness) of at least 10, and a structure having columns extending from one surface toward another surface of flat surfaces.

Since the hydrogen-absorbing alloy powder of the present invention has a flaky shape or configuration having a thickness of at most 10 µm and an aspect ratio (a ratio of a longitudinal diameter relative to a thickness) of at least 10, the surface area per unit volume is large, and by stacking the flaky shape particles in a thickness direction, the frequency of contact between the particles becomes excellent and the thermal conductivity is improved, whereby the rate of hydrogen absorption and desorption reaction can be increased. Further, since the particles are formed into a flaky shape, inclusion of a gas at the time of molding employing a binder such as a resin can be reduced, and orientation will be excellent, whereby solidifying and molding property will be excellent. Furthermore, since the hydrogen-absorbing alloy powder of the present invention has a structure of anisotropic columns extending from one surface toward another surface of flat surfaces, the strain at the time of hydrogen absorption can be reduced and thus the particle size reduction can be prevented. Accordingly, when the alloy powder is used for a nickel-hydrogen battery, a hydrogen storage medium for a fuel cell, and a heat pump, the performance thereof can be improved and their lifetimes can be prolonged.

The hydrogen-absorbing alloy powder of the present invention preferably contains at least 10 wt% of at least one element selected from the group consisting of rare earth elements, titanium, zirconium, vanadium, magnesium, calcium, yttrium, hafnium, niobium, tantalum, nickel, iron, manganese, copper, cobalt, chromium, aluminum, boron, carbon, silicon, phosphorus, sulfur, nitrogen, palladium and platinum, by which the hydrogen-absorbing alloy powder having the above characteristics can easily be produced.

The hydrogen-absorbing alloy powder of the present invention having the above characteristics, is particularly preferably useful for a nickel-hydrogen battery, a hydrogen storage medium for a fuel cell, and a heat pump.

The present invention also provides a method for producing a hydrogen-absorbing alloy powder, which comprises blowing a gas under a pressure of at least 5 kgf/cm² on a melt of a hydrogen-absorbing alloy to form melt droplets in a sprayed form, colliding the melt droplets against a cooling rotator which rotates at an angular velocity of at least 2 π/second, and quenching the melt droplets at a rate of at least 100°C per second.

By the method for producing a hydrogen-absorbing alloy powder of the present invention, it is possible to efficiently produce a hydrogen-absorbing alloy powder comprising particles which have a flaky shape having a thickness of at most 10 µm and an aspect ratio (a ratio of a longitudinal diameter relative to a thickness) of at least 10, and a structure having columns extending from one surface toward another surface of flat surfaces.

In the method for producing a hydrogen-absorbing alloy powder of the present invention, it is preferred to use an inert gas as the gas to be blown, by which it is possible to prevent the formation of a film such as a metal oxide which is inactive against hydrogen, on the surface of the particles.

In the method for producing a hydrogen-absorbing alloy powder of the present invention, the cooling rotator preferably has a cone shape or a disc shape, by which as compared with the case where a cylindrical roll is used as the cooling rotator, spherical particles can substantially be decreased and it is possible to efficiently produce the desired flaky particles.

### Brief Description of the Drawing

Fig. 1 is a diagrammatic explanatory view showing an example of a device used for the method for producing a hydrogen-absorbing alloy powder of the present invention.

Fig. 2 is a graph showing the results of Test Example 2.

Fig. 3 is a scanning electron microscopic photograph of 6,000 magnification, showing a sectional structure of a particle of powder obtained in Example 1.

Fig. 4 is a scanning electron microscopic photograph of 600 magnification, showing the shape of particles of powder obtained in Example 1, after repeating tests of hydrogen absorption and desorption by a gas-solid conversion.

Fig. 5 is a scanning electron microscopic photograph of 600 magnification, showing the shape of particles of powder obtained in Comparative Example 3, after repeating tests of hydrogen absorption and desorption by a gas-solid conversion.

### Mode for Carrying out the Invention

Hereinafter, the present invention will be described in further detail with reference to preferred embodiments.

The material of the hydrogen-absorbing alloy powder of the present invention is not particularly limited so long as it has a hydrogen absorption and desorption behavior, but as mentioned above, it is particularly effective to use a metal or an alloy containing at least 10 wt% of at least one element selected from the group consisting of rare earth elements, titanium, zirconium, vanadium, magnesium, calcium, yttrium, hafnium, niobium, tantalum, nickel, iron, manganese, copper, cobalt, chromium, aluminum, boron, carbon, silicon, phosphorus, sulfur, nitrogen, palladium and platinum.

The hydrogen-absorbing alloy powder of the present invention is obtained by forming melt droplets by a gas-atomizing method from a melt of a metal or an alloy having a hydrogen absorption and desorption behavior, and colliding the melt droplets against the cooling rotator before the solidification of the melt droplets. Specifically, for example, the method described in Japanese Patent No. 2,544,963 by the present applicant, may preferably be used.

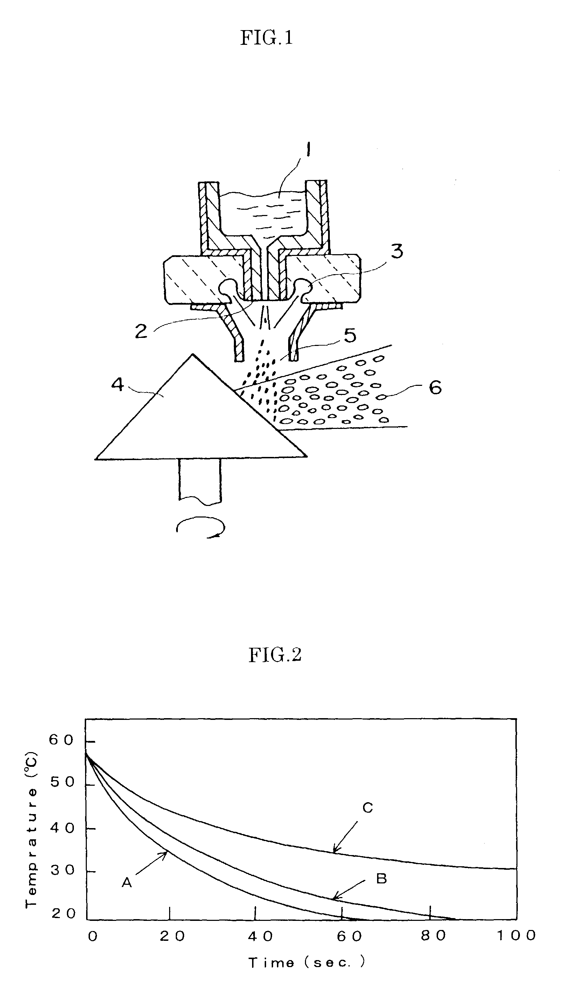

The method will be explained in further detail. First, the hydrogen-absorbing alloy material is melted by an apparatus such as a high frequency melting furnace or an electric resistant furnace. Then, as shown in Fig. 1, a nozzle 2 from which a melt 1 flows out is disposed, and spray nozzles 3 are disposed which blow a high pressure spray gas against the melt 1 dropping from the nozzle 2. The spray nozzles 3 are placed in, for example, a circular form so as to surround the nozzle 2, and have a structure such that a high speed gas is blown against the flow of the melt 1 from a number of ejecting nozzles. Under the nozzle 2, a cooling rotator 4 is placed so that its rotating shaft would be a little shifted horizontally from the position directly under the nozzle 2.

Accordingly, against the flow of the melt 1 flowing out and dropping from the nozzle 1, a high pressure gas is blown from the spray nozzle 3, whereby droplets 5 of melt 1 are formed. Melt droplets 5 are scattered downwardly, spreading horizontally, and collided against a cone-shaped face of the cooling rotator 4, and quenched and solidified to form flaky thin particles 6. If the case requires, the ones of the desired shape may be selected and collected by a means of, for example, sifting, from the particles 6 thus obtained.

The cooling rotator 4 has a cone shape in this case, but may have a disc shape. The material of the cooling rotator 4 is not particularly specified. However, a member of copper or a copper alloy, iron or iron alloy, or ones having surface treatment such as plating applied thereon, may be used. Heat resistant materials such as ceramics may also be used.

Further, as the conditions for disintegration or powder formation, it is preferred to set the conditions such that the gas pressure blown from the nozzles 3 is at least 5 kgf/cm², the rotational speed of the cooling rotator 4 is at a level of an angular velocity of at least 2 π/second, and the melt collided against the cooling rotator 4 is quenched at a rate of at least 100°C per second. When the gas pressure blown from the nozzles 3 and the rotational speed of the cooling rotator 4 are lower than the above level and the rate of quenching is lower than the above level, it is difficult to efficiently obtain a hydrogen-absorbing alloy powder having the above-mentioned shape and structure. Further, as the gas to be blown, for example, an inert gas such as argon or helium is preferably used.

When the droplets 5 of the melt 1 are collided against the cooling rotator 4, the droplets are flattened and, at the same time, the cooling rate at the contact surface with the cooling rotator 4 becomes higher than the non-contact surface, whereby difference of the quenching rate is generated in the interior of cooled particles, and the resultant particles 6 have a structure having columns extending vertically relative to plane areas. Spherical particles obtainable by conventional atomizing methods, are isotropically quenched. Accordingly, such particles have problems that the interior structure of the particles is a radially isotropic structure, the isotropic structure has a large strain of lattice, and the strain increasing at the time of hydrogen absorption is hardly reduced. On the contrary, the interior structure of the particles obtained by the present invention is an anisotropic columnar structure as mentioned above, the strain of lattice is small and the strain at the time of hydrogen absorption can easily be reduced. Accordingly, by the hydrogen-absorbing alloy powder of the present invention, the strain at the time of hydrogen absorption can be reduced, and the particle size reduction of the powder particles can be prevented.

The hydrogen-absorbing alloy powder of the present invention obtained by the above method has characteristics that it has a flaky shape having a thickness of at most 10 µm and an aspect ratio (a ratio of a longitudinal diameter relative to a thickness) of at least 10, and a structure having columns extending from one surface toward another surface of flat surfaces, as mentioned foregoing. The thickness is preferably at most 5 µm and the aspect ratio is preferably at least 15. If the thickness exceeds 10 µm, the structure having columns extending from one surface toward another surface of flat surfaces can not efficiently be obtained. If the aspect ratio is less than 10, the effects by the increase of surface area per unit volume and the effects for improving the frequency of contact between the particles can not efficiently be obtained, and the effects for improving the rate of hydrogen absorption and desorption and prolonging the lifetime are poor.

The hydrogen-absorbing alloy powder of the present invention is useful for every application utilizing the hydrogen absorption and desorption reaction of the hydrogen-absorbing alloy, and particularly suitable for a nickel-hydrogen battery using the hydrogen-absorbing alloy as a cathode material, a hydrogen tank for a fuel cell using the hydrogen-absorbing alloy as a hydrogen storage medium, and a heat pump using the hydrogen-absorbing alloy as a heat transfer material.

### Example 1

hydrogen-absorbing alloy powders of Sample Nos. 1 to 4 as indicated in Table 1 were obtained by preparing an alloy with an alloy composition of LaNi₅ (16.7 atom % of lanthanum and 83.3 atom % of nickel) and processing this alloy with the methods as indicated in Table 1 i.e. varying the conditions such as the blown gas pressure, the rotational rate of the cooling rotator, and the quenching rate. Further, for comparison, the above alloy was processed by an atomizing method under the conditions as indicated in Table 1 which are in accordance with the method as described in JP-A-7-102307 to obtain a hydrogen-absorbing alloy powder of Sample No. 5 as indicated in Table 1. The results are shown in Table 1.

**Table 1**

| Sample No. | 1 | 2 | 3 | 4 | 5 |
|---|---|---|---|---|---|
| Blown gas pressure (kgf/cm²) | 20 | 80 | 7 | 3 | 10 |
| Shape of cooling rotator | Cone | Cone | Cone | Cone | Cylindrical |
| Rotational rate of cooling rotator (π/sec) | 100 | 130 | 3 | 1.7 | 30 |
| Quenching rate of melt (°C/sec) | 10³-10⁴ | 10³-10⁴ | 10²-10³ | 50-80 | 10²-10³ |
| Thickness (µm) | 2.3 | 4.1 | 9.6 | 13.5 | 45.2 |
| Longitudial diameter (µm) | 83 | 32 | 128 | 247 | 503 |
| Aspect ratio | 36.1 | 7.8 | 13.3 | 18.3 | 11.1 |
| Interior structure | Columnar | Radial | Columnar | Particles | Particles |

### Comparative Example 1

Using an alloy having the same composition as in Example 1, powders of spherical particles as indicated by Sample Nos. 6 and 7 in Table 2 were prepared by a conventional atomizing method. The sectional structures of these particles were inspected.

**Table 2**

| Sample No. | Particle size (µm) | Interior structure |
|---|---|---|
| 6 | 36.7 | Radial |
| 7 | 92.8 | Radial (periphery) + Particles (inside) |

### Comparative Example 2

Using an alloy having the same composition as in Example 1, a belt-like sample as indicated by Sample No. 8 in Table 3 were prepared by a conventional single-roll liquid quenching method. The sectional structure thereof was inspected. The results are shown in Table 3.

**Table 3**

| Sample No. | Thickness (µm) | Interior structure |
|---|---|---|
| 8 | 16.3 | Columnar (roll contact surface) + Particles (roll non-contact surface) |

### Comparative Example 3

Using an alloy having the same composition as in Example 1, a hydrogen-absorbing alloy powder was prepared by casting a melt of this alloy into a mold and roughly pulverizing the resultant cast ingot. This powder is referred to Sample No. 9.

### Test Example 1

Using the powder of Sample No. 1 of Example 1, the powder of Sample No. 6 of Comparative Example 1 and the powder of Sample No. 9 of Comparative Example 3, repetitive experiments of hydrogen absorption and desorption by a gas-solid conversion were conducted, and average particle sizes before and after the experiments were measured. As the conditions of the hydrogen absorption and desorption, the hydrogen pressure at the time of hydrogen absorption was about 2 MPa and constant, the hydrogen pressure at the time of hydrogen desorption was about 0.01 torr, the number of repetition was 100, and the temperature was 45°C and constant.

The results are shown in Table 4. From the results of Table 4, it is evident that the powder of Sample No. 1 of Example 1 is extremely small in the tendency of particle size reduction by the repetition of hydrogen absorption and desorption, as compared with the the powder of Sample No. 6 of Comparative Example 1 and the powder of Sample No. 9 of Comparative Example 3.

**Table 4**

| Sample No. | Shape of particles | Interior structure | Ave. particle size before experiment | Ave. particle size after experiment |
|---|---|---|---|---|
| 1 | Flaky | Columnar | 87.6 µm | 85.3 µm |
| 6 | Spherical | Radial | 36.7 µm | 9.2 µm |
| 9 | Pulverized | - | 36.7 µm | 9.2 µm |

### Test Example 2

Each of the powder of Sample No. 1 of Example 1, the powder of Sample No. 6 of Comparative Example 1 and the powder of Sample No. 9 of Comparative Example 3, was charged into a stainless steel container for evaluation of a hydrogen-absorbing alloy together with a copper powder, the change of temperature on the outer wall of the stainless steel container between the time of hydrogen absorption and the time of hydrogen desorption, was measured, to compare the thermal conductivity. The proportional ratio of the hydrogen-absorbing alloy and the copper powder was 1 to 1 by mass ratio.

The results are shown in Fig. 2. In Fig. 2, the line A shows the results of Sample No. 1 of Example 1, the line B shows the results of Sample No. 6 of Comparative Example 1 and the line C shows the results of Sample No. 9 of Comparative Example 3. From the results of Fig. 2, it is evident that the one wherein the powder of Sample No. 1 of Example 1 was charged, is fast in the temperature change and the best in the thermal conductivity.

### Test Example 3

Each of the powder of Sample No. 1 of Example 1, the powder of Sample No. 6 of Comparative Example 1 and the powder of Sample No. 9 of Comparative Example 3, was molded with a resin binder, and the volume fractions of the alloy, resin and gas were calculated by the incorporated amount and the volume after molding. The volume ratio of the hydrogen-absorbing alloy and the resin binder was 1 to 1 by volume ratio.

The results are shown in table 5. From the results of Table 5, it is evident that when the the powder of Sample No. 1 of Example 1 and the powder of Sample No. 6 of Comparative Example 1 were used, the inclusion ratio of gas is small as compared with the case where the powder of Sample No. 9 of Comparative Example 3 was used.

**Table 5**

| Sample No. | Shape of particles | Alloy | Resin | Gas |
|---|---|---|---|---|
| 1 | Flaky | 0.498 | 0.498 | 0.004 |
| 6 | Spherical | 0.499 | 0.499 | 0.002 |
| 9 | Pulverized | 0.465 | 0.465 | 0.070 |

### Test Example 4

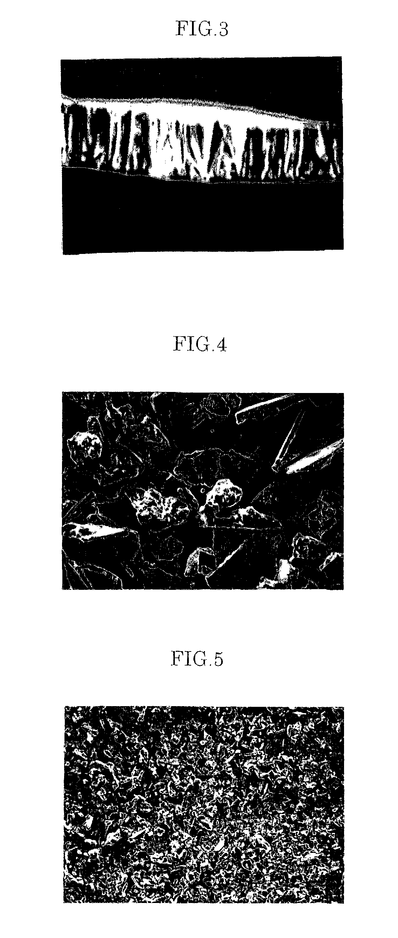

The sectional structure of the powder of Sample No. 1 of Example 1 was inspected by a scanning electron microscope. Fig. 3 shows a scanning electron microscopic photograph of the above powder with 6,000 magnification. As is evident from Fig. 3, a structure of complete columns extending from one surface toward another surface of flat surfaces, was formed.

Further, with respect to the powder of Sample No. 1 of Example 1 and the powder of Sample No. 9 of Comparative Example 3 after conducting the repetitive experiments of hydrogen absorption and desorption by a gas-solid conversion, the shapes thereof were inspected by a scanning electron microscope.

Fig. 4 shows a scanning electron microscopic photograph of the powder of Sample No. 1 of Example 1 with 600 magnification. Fig. 5 shows a scanning electron microscopic photograph of the powder of Sample No. 9 of Comparative Example 3 with 600 magnification. As is evident from these figures, the powder of Sample No. 1 of Example 1 was not finely pulverized and maintained its original flaky shape, whereas the powder of Sample No. 9 of Comparative Example 3 were remarkably finely pulverized.

As described in the foregoing, since each of the particles of the hydrogen-absorbing alloy powder of the present invention has a flaky shape having a thickness of at most 10 µm and an aspect ratio of at least 10, and a structure of columns extending from one surface toward another surface of flat surfaces, the ratio of hydrogen absorption and desorption reaction can be increased, inclusion of gas at the time of molding the alloy powder using a binder of e.g. a resin, can be decreased, and the solidifying and molding property can be improved, and also the strain at the time of hydrogen absorption can be reduced, whereby particle size reduction can be prevented. Accordingly, when the alloy powder is used for a nickel-hydrogen battery, a hydrogen storage medium for a fuel cell, or a heat pump, the performance thereof can be improved and the lifetime can be prolonged. Further, according to the method for producing the hydrogen-absorbing alloy powder of the present invention, the powder having the above specific configuration and structure, can be efficiently produced.

## Claims

1. A hydrogen-absorbing alloy powder comprising particles which have a flaky shape having a thickness of at most 10 µm and an aspect ratio (a ratio of a longitudinal diameter relative to a thickness) of at least 10, and a structure having columns extending from one surface toward another surface of flat surfaces.

2. The hydrogen-absorbing alloy powder according to Claim 1, wherein the alloy powder contains at least 10 wt% of at least one element selected from the group consisting of rare earth elements, titanium, zirconium, vanadium, magnesium, calcium, yttrium, hafnium, niobium, tantalum, nickel, iron, manganese, copper, cobalt, chromium, aluminum, boron, carbon, silicon, phosphorus, sulfur, nitrogen, palladium and platinum.

3. The hydrogen-absorbing alloy powder according to Claim 1 or 2, wherein the alloy powder is used for at least one selected from the group consisting of a nickel-hydrogen battery, a hydrogen storage medium for a fuel cell, and a heat pump.

4. A method for producing a hydrogen-absorbing alloy powder, which comprises blowing a gas under a pressure of at least 5 kgf/cm² on a melt of a hydrogen-absorbing alloy to form melt droplets in a sprayed form, colliding the melt droplets against a cooling rotator which rotates at an angular velocity of at least 2 π/second, and quenching the melt droplets at a rate of at least 100°C per second.

5. The method for producing a hydrogen-absorbing alloy powder according to Claim 4, wherein the blown gas is an inert gas.

6. The method for producing a hydrogen-absorbing alloy powder according to Claim 4 or 5, wherein the cooling rotator is of a cone shape or a disc shape.
